# EUROPEAN PATENT APPLICATION

(11) **EP 1 686 795 A1**
(43) Date of publication of application: **02.08.2006**
(21) Application number: 05001855.5
(22) Date of filing: 28.01.2005
(51) Int. Cl.: H04N 5/445

(54) **Broadcast receiver**

(71) Applicant: DEUTSCHE THOMSON-BRANDT GMBH, 78048 Villingen-Schwenningen (DE)
(72) Inventor: Schmidt-Uhlig, Thomas, Dr., 37130 Gleichen (DE)
(74) Representative: Rossmanith, Manfred

(57) **Abstract**

A broadcast receiver (1) comprises a selection list (8b) of stations to which the receiver (1) may be tuned and which transmit programs in different languages, and a user interface for receiving a digital datum representative of a position in said selection list (8b). In the selection list (8b) those stations that transmit programs in a first language are arranged consecutively in a first language block (10bf), and those stations that transmit programmes in a second language are arranged consecutively in a second language block (10be).

## Description

The present invention relates to a broadcast receiver for receiving programs from a variety of stations which are stored in the receiver for access. Conventionally such receivers have a user interface, e. g. in the form of a remote control, for tuning the receiver to a desired station by pressing key associated to it or selecting it from a list of stations.

When the number of stored stations is large, e. g. greater than ten or twelve, selecting a station becomes tedious because if each station had one key associated to it, a large keyboard would be required and finding the correct key becomes difficult, or, if the stations were accessed by combining the station number on a ten-digit keypad, several keys must be pushed in a sequence in order to specify a desired station. To overcome this problem, devices receiving a large number of stations, such as satellite receivers, are often provided with graphic user interfaces allowing a user to select a desired station from a list of stations. In any case it is difficult to learn by heart the keys or station numbers associated to a large number of stations. In particular in case of a satellite receiver, where it is common to have several dozens or even hundreds of stations stored, it is practically impossible to learn by heart the keys or key sequences associated to all stations. If a user does not know the key or station number associated to a station he wants to watch, he can only try out all stations stored in the receiver one after the other until he finds the desired station. This process, also referred to as "zapping" can be a very time consuming and annoying process. This problem is alleviated by the use of a graphic user interface, as in this case a list of stations is presented to the user, who can find the desired station by scrolling through the list. However, in particular if the number of stations is very large and includes stations from a variety of countries, when scrolling through the list of stations the user is confronted with many station names and acronyms that he does not know. Many of those stations broadcast in languages which the user does not understand and which he will therefore usually not want to watch.

EP 0 486 988 B2 discloses a broadcast receiver which carries out an automatic scan of a frequency range, detects stations transmitting in that frequency range, detects an identification code of a station in a broadcast signal received from it, and establishes a list of the frequencies of the stations it finds in a predetermined order based on the identification code. Stations which have a number in their name such as RAI1 to RAI3, Rete 4, Canale 5, Italia 7 are stored at a position of the list according to the number, so that they are easy to remember by the user.

While such a scheme may be practical in Italy, it is not generally applicable in any country. If this prior art receiver is used in a country where the above mentioned stations are not available, the corresponding positions of the list will remain empty. Even if it is tried to adapt the scheme to the circumstances in an other country, the result is generally not satisfying. E.g. in Germany there are several broadcast stations, the name of which comprises a number 2 or 3, so that an unambiguous association of these stations to a place in the frequency list is not possible. In addition, many broadcast stations do not have any number in their names and are not sortable in the described way.

The object of the present invention is, therefore, to provide a broadcast receiver, which facilitates for a user the process of selecting and tuning the receiver to a desired station.

Another object of the invention is to enable a user to access only stations which broadcast in a preferred language without having to care about stations broadcasting in other languages.

The object is achieved by a broadcast receiver comprising a list of stations to which the receiver may be tuned and which transmit programs in different languages, and a user interface for receiving a digital datum representative of a position in said list, in which list those stations that transmit programs in a first language are sortable into a first block of stations, and those stations that transmit programs in a second language are sortable into at least one second block of stations. The term block of stations may also be understood conceived as sub-list of the list of all stations. The terms block of stations, sub-list and language block are in the following specification used synonymously.

If a user is interested only in programs in the first language, he or she only needs to know the position of the first block in the list, in order to tune the receiver to a station in said language block and to step through the stations. If the user selects the first or the last of the stations in said language block he or she may access the stations one after the other by incrementing or decrementing the station number, respectively, in a known manner.

In order to make the language block corresponding to the first language easy to find, wherein the language may be the user's favourite language, it is preferably located at the very beginning of the list of stations.

In a receiver where the user interface is language-based and comprises means for setting a language for communication between a user and the user interface, the first block in the selection list preferably comprises those stations that transmit programs in the language set for the user interface, since it may be assumed that the language set by a user for the user interface will be the language which he is most familiar with.

Alternatively, the user interface might comprise setting means enabling a user to arbitrarily set an order of the language blocks in the selection list.

It is further conceivable to display only those stations that transmit in a language or languages specified by the user, and to suppress the display of any other station.

In another embodiment the user may enter a geographical region in which he or she resides. The first language block will then preferably include stations that broadcast programmes in a language that is predominantly spoken in the respective geographical region. If various languages are spoken in the geographical region, like e.g. in Switzerland, where German, French, Italian and Rhaeto-Romanic are spoken, the stations broadcasting in those languages are ordered in consecutive blocks of stations, or language blocks. If an even more exact input of the geographical position is provided for, like e.g. the city of residence, the various language blocks may be automatically arranged in the order of importance of the respective language for the respective geographical position.

If the number of languages is not too high, the receiver might comprise a plurality of lists of the stations, in which those stations that transmit programs in a same language are arranged consecutively in language blocks, and in which the order of the language blocks is different for the various lists. In this case the user interface advantageously comprises means enabling a user to specify one preferred list among the plurality of lists.

Alternatively, the receiver might comprise a parent list of stations, which indicates, for at least part of the stations of the parent list, at least one language in which the programs are transmitted, and processing means for establishing the list comprising the various assorted language blocks based on the language indicated for the stations and at least one preferred language input by a user.

The parent list may be a predefined list stored in a non-volatile memory, e.g. a read-only memory or a flash memory, which may be pre-programmed, e.g. by the manufacturer of the receiver. Alternatively, the parent list may be stored in a random access memory, so that it can be established and written into the memory during operation of the receiver based on language information which is extracted from a received program. In another embodiment the parent list is downloadable during operation of the broadcast receiver, e.g. in a data stream that is transmitted together with the programme.

In a further development the broadcast receiver includes means to arrange the stations within a language block in a user-definable sequence. In yet a further development a favourite stations list is set up in a generally known manner including only stations from the preferred language block.

In case new programmes are added, e.g. by performing an automatic station search, stations that were not in the list before the automatic station search are added to the respective language blocks according to the language of the programmes .

If one or more stations transmit programmes in more than one language, the respective station appears in several language blocks, according to the respective languages. Alternatively, only the main language may be considered for sorting into language blocks.

If language information for a station is not available, the station may be arranges at the end of a list, or the user interface may request a manual input.

In a further development of the inventive broadcast receiver, different arrangements of language blocks are stored for different individual users. The broadcast receiver then provides means for setting or selecting the user, which in turn effect selection of the appropriate arrangement of language blocks.

Further features and advantages of the present invention will become apparent from the subsequent description of embodiments, referring to the appended drawings.
- Fig. 1: is a schematic representation of an environment where a receiver according to the invention is used;
- Fig. 2: is a block diagram of the receiver according to a first embodiment of the invention; and
- Fig. 3: is a block diagram of the receiver according to a second embodiment.

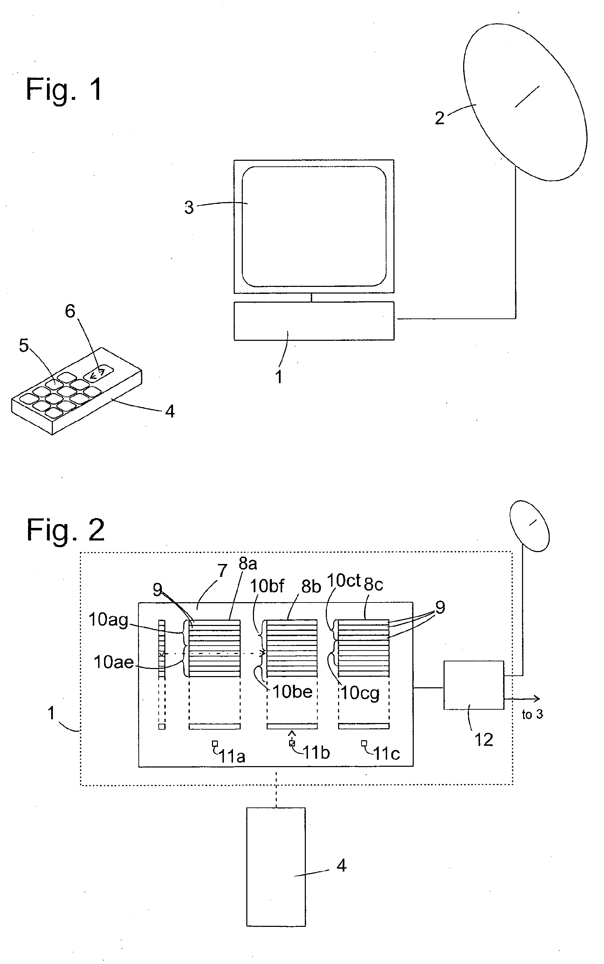

In Fig. 1, the receiver 1 is a satellite receiver which receives high frequency TV signals from a satellite dish 2, and provides a base band video signal of a station to which it is tuned to a television set 3. Each station has an integer number assigned to it and a remote control unit 4 for controlling receiver 1 has a keyboard with decimal keys 5 which may be pushed by a user in order to input an integer number of one or more digits specifying a station to which the user wishes the receiver 1 to be tuned. The keyboard further comprises an increment/decrement key 6, by which the user can switch from a station to which the receiver 1 is currently tuned to the next higher or lower station number.

As shown in Fig. 2, according to a first embodiment, the receiver 1 has a non-volatile memory 7, in which lists 8a, 8b and 8c of the stations are stored.

Each entry 9 of the lists specifies a frequency at which a TV station can be received, and a character string representative of the name of the station. The elements in the lists 8a, 8b, 8c are the same, but their order is different. In list 8a, a first block 10ag of consecutive entries 9 lists all stations to which the receiver 1 may be tuned and which broadcast in German language, and a subsequent block 10ae lists all stations that broadcast in English language. This list 8a is intended for German users who mostly watch German programmes and prefer to have these at the beginning of the list, so that they may be selected by pressing preferably only one, or at least an minimum possible number of decimal keys 5. Since English is the foreign language which is most likely to be understood by a German telespectator, the English language stations are grouped into the second block 10ae so that they may be selected conveniently not only by directly inputting their number using the decimal keys 5, bus also by incrementally addressing them from the end of block 10ag using the increment/decrement key 6.

List 8b, intended for French users, has all French language stations grouped into a first block 10bf and English language stations grouped into a block 10be. List 8c, being intended for a Turkish language user in Germany, has a first Block 10ct of programs in Turkish language, a block 10cg of German language programs, etc. The stations in block 10cg are the same as in block 10ag, only their position is different in lists 8a, 8c.

Obviously, more lists may be provided for users of other nationalities, or different sets of lists may be provided according to the country or region in which the receiver 1 is used.

Each list 8a, 8b or 8c has a flag 11a, 11b or 11c associated to it, the status of which may be set using the remote control unit 4. In Fig. 2, the tick-box representing the flag 11b is ticked, indicating that list 8b is active and the others are inactive. I.e., if a user selects e.g. station number 7 from the stations numbered 1 to n, the frequency of list element number 7 is retrieved from list 8b and is set in tuner 12 of receiver 1. The character string retrieved from list element number 7 of list 8b may be superimposed with the video signal obtained from tuner 12, so that it appears on the screen of TV set 3.

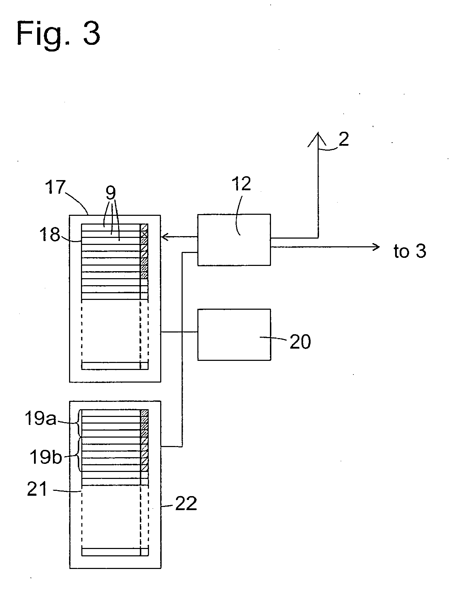

According to a second embodiment of the receiver, which is explained referring to Fig. 3, the receiver comprises a first memory 17, which may be a non-volatile memory, in which a single list 18 is stored. The list 18 may be prestored in the memory 17 by the manufacturer of the receiver 1. Each element 9 of list 18 indicates a name of a station, its frequency, and the language in which the programs of this station are transmitted, represented by small squares having different shading patterns. A controller unit 20, e.g. a microprocessor has a video interface which is adapted to generate images of characters to be displayed on the screen of TV set 3. It is used for setting operating parameters by displaying their names and current values on the screen and enabling a user to increment or decrement these values using increment/decrement key 6. Since a controller unit of this type is generally known, its structure is not explained in detail here. One of the operating parameters that can be set using the control unit 20 is the language in which the names of the parameters are displayed. When this language is set, the controller unit 20 retrieves all entries from list 18 in which this language is indicated and copies them into a block 19a of consecutive entries at the beginning of a second list 21 in a second memory 22, which may be a random access memory. Entries corresponding to stations transmitting in other languages are grouped into subsequent blocks 19b, in memory 22. The list 21 is then used as a selection list, i.e. if the user inputs an integer number using the keys 5 or 6, the entry corresponding to this number is read from list 21, and the receiver is tuned to the frequency indicated in this entry.

Memory 22 may be permanent or volatile; in the latter case, the list 22 is restored from list 18 every time when the receiver 1 is switched on.

In another embodiment the second list 21 is a cross-reference list, which assigns list elements of the first list to positions in which they are displayed and accessed, according to their respective language and the selection the user made.

According to a modified embodiment, the controller unit 20 is adapted to display on the screen of TV set 3 a list of all languages of the stations of the list 18, and enables the user to specify an order in which he wishes the various language blocks to be arranged in the second memory 22. In this way, a user has complete control of the order of the language blocks in the second list 21, and he can have the block containing stations which transmit in his favourite language placed first in the list 21, even if this language is not supported by the user interface.

According to a further modified embodiment, memory 17 is a non-volatile random access memory, and the controller unit 20 is adapted to trigger a frequency scan by the tuner 12 if it finds no list 18 in memory 17. During the frequency scan, the tuner 12 writes an entry into list 18 for each station it detects. The entry comprises at least the frequency where the station is found, and, if name and language of the station are included in its signal, also these. When the frequency scan is finished, the control unit 20 obtains list 21 from list 18 as described above.

## Claims

1. A broadcast receiver (1) including means for storing a list (8a, 8b, 8c; 21) of stations to which the receiver
(1) may be tuned and which transmit programmes in respective different languages, and a user interface (4) for receiving a digital datum representative of a position of an element in said list (8a, 8b, 8c; 21), **characterized in that** in the list (8a, 8b, 8c; 21) those stations that transmit programs in a first language are sortable into a first language block (10ag, 10bf, 10ct; 19a), and those stations that transmit programmes in a second language are sortable into at least one second language block (10ae, 10be, 10cg; 19b).

2. The receiver of claim 1, wherein the user interface is language-based and includes means for setting a language for communication between a user and the user interface, and wherein the first block (10ag, 10bf, 10ct; 19a) in the list (8a, 8b, 8c; 21) comprises those stations that transmit programmes in the language set for the user interface.

3. The receiver of claim 1, wherein a geographical region of operation of the receiver is settable and wherein the first block (10ag, 10bf, 10ct; 19a) in the list (8a, 8b, 8c; 21) comprises those stations that transmit programmes in a language predominantly used in the set geographical region.

4. The receiver of claim 1, wherein the user interface includes means for setting an order of the language blocks (10ag, 10ae, 10be, 10bf, 10cg, 10ct; 19a, 19b) in the list (8a, 8b, 8c; 21).

5. The receiver of one of the preceding claims, comprising a plurality of lists (8a, 8b, 8c) of stations in which those stations that transmit programs in a same language are sortable into respective language blocks (10ag, 10ae; 10bf, 10bg; 10ct, 10cg), wherein the user interface comprises means for specifying an active list (8b) among the plurality of lists (8a, 8b, 8c).

6. The receiver of any one of the preceding claims, wherein stations that transmit in a plurality of different languages appear in a respective plurality of language blocks (10ag, 10ae; 10bf, 10bg; 10ct, 10cg), according to their respective languages, or appear for a main language only.

7. The receiver of one of claims 1 to 4, comprising a parent list (18) of stations, which indicates, for at least part of the stations of the parent list (18), at least one language in which their programs are transmitted, and means (20) for establishing the list (21) based on the language indicated for the stations and at least one preferred language input by a user.

8. The receiver of claim 7, wherein the parent list (18) is stored in a memory (17).

9. The receiver of claim 7, wherein the parent list (18) is stored in a random access memory, further comprising means for extracting language information from a received programme and storing it in the parent list.

10. The receiver according to any one of the preceding claims, **characterized in that** stations that have no language information associated to it are arranged at the end of the list or cause the user interface to request manual user interaction.
